# EUROPEAN PATENT APPLICATION

(11) **EP 1 605 415 A1**
(43) Date of publication of application: **14.12.2005**
(21) Application number: 04291480.4
(22) Date of filing: 11.06.2004
(51) Int. Cl.: G07F 7/10

(54) **File management system**

(71) Applicant: Axalto SA, 92120 Montrouge (FR)
(72) Inventor: Soni, Chintan c/o Axalto SA, 50 avenue Jean-Jaurès 92120 Montrouge (FR)

(57) **Abstract**

A file management system is disclosed comprising a means for accessing a non-volatile memory, checking for the presence of a data file and creating the data file if it is not present. The system is primarily for use in smart cards having an EEPROM as the non-volatile memory means and using a "select file" function of the smart card operating system to check the presence of a data file.

## Description

### FIELD OF INVENTION

The present invention relates to a file management system and particularly, but not exclusively, to a file management system for portable electronic cards, commonly known as smart cards.

### BACKGROUND OF THE INVENTION

A smart card is a device, usually approximating to a credit card, which incorporates electronic circuitry for storing and processing data. As smart cards are multi-purpose devices, software programs or applets may be loaded into memory on the smart card to enable different applications. Typically, these software programs require additional files for storing and manipulating data.

For financially related smart cards, for example, files may store information relating to bank accounts, transaction details and personal identification numbers. The files are created when the smart card is personalised for a user.

In prior art systems, a software application on a Personal Computer (PC) creates files by way of a smart card reader or personalisation machine. This communication happens over a PC/SC (Personal Computer/Smart Card) interface. The interface can be on a serial port or the USB (Universal Serial Bus) port of the PC. The smart card reader passes these commands to the smart card in the form of a APDU (Application Protocol Data Unit). And the smart cards responds with a status word of the execution of the command.

When the smart card is personalised the software application on the PC uses a "script" comprising a series of commands to create a file system and data files. The file system comprises at least three different types of files: a Master File (MF); Dedicated Files (DF); and Elementary Files (EF). The MF is mandatory for conformance with smart card standards and represents the root of the file structure. The MF contains file control information and allocatable memory and may have DFs and EFs as descendents. A DF has similar properties to the MF and may have other DFs and/or EFs as descendents. An EF is the bottom of the chain from the root and may contain data as well as file control information and may not have any descendents. Various different types of EFs are available, such as, a working file, a public file, an application control file or an internal secret file. The different types may also have different structures, such as, linear fixed, linear variable, cyclical or transparent. Hence, the scripts can be extremely complicated.

The specification of data files for an applet is given to each purchaser of the smart card. The script is then created so that each card can be personalised.

If there is even a small error in creation of the script for the data file for the applet, data files may be created incorrectly. If files required by a particular applet are not available, the applet may malfunction. This may happen if the files are either of an incorrect format or are missing.

### SUMMARY OF THE INVENTION

According to a first aspect of the present invention there is provided a method of managing files in an electronic portable card, the method comprising the steps of:
(i) accessing a non-volatile memory means;
(ii) checking for the presence of at least one data file in the non-volatile memory means; and
(iii) creating the at least one data file in the non-volatile memory means if the at least one data file is not present.

Preferably, step (ii) comprises attempting to select the at least one data file and monitoring a response.

Preferably, when the response provides information relating to the at least one data file, the presence of the at least one data file is verified.

Preferably, the method further comprises the step of requesting personalisation data for the at least one data file.

Preferably, the non-volatile memory means is an Electronically Erasable Programmable Read-Only Memory (EEPROM).

According to a second aspect of the present invention there is provided a computer program product for a portable electronic card according to the first aspect of the invention.

According to a third aspect of the present invention there is provided an electronic portable card on which files are managed according to the first or second aspect of the invention.

### BRIEF SUMMARY OF THE DRAWINGS

Fig. 1 illustrates components of a prior art smart card.
Fig. 2 shows a flow diagram illustrating the steps involved in a method according to the present invention.

### DETAILED DESCRIPTION

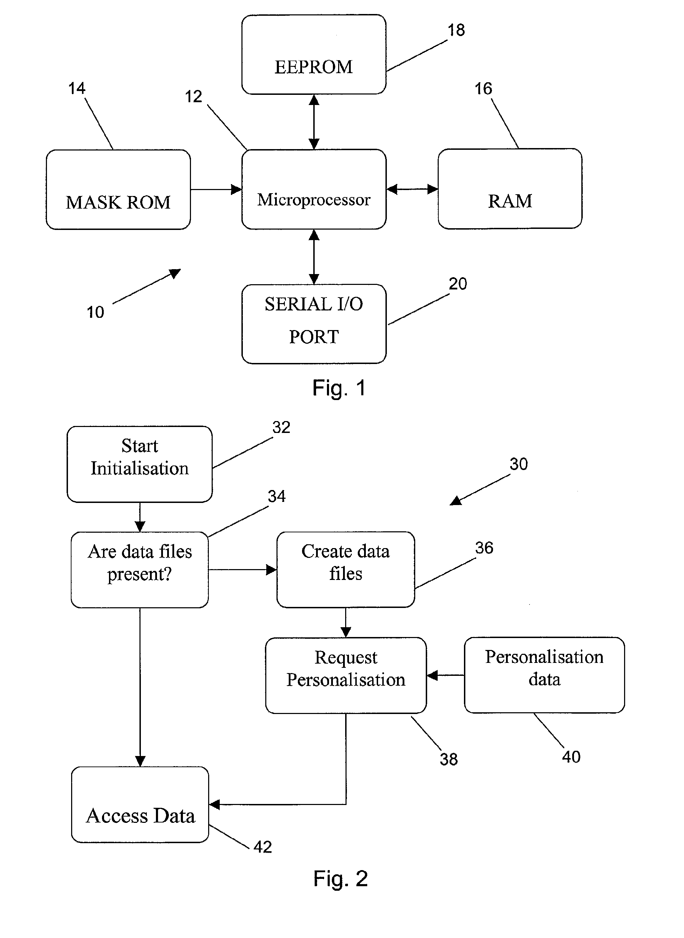

Referring to Fig. 1, a prior art smart card 10 has a microprocessor 12, a non-volatile Read-Only Memory (ROM) 14, a volatile Random Access Memory (RAM) 16, an Electronically Erasable Programmable Read-Only Memory (EEPROM) 18 and an input/output interface 20.

The ROM 14 is loaded during manufacture with a smart card operating system. The operating system provides basic features such as file manipulation and, in some cases, cryptographic algorithms.

The smart card 10 provides functionality through a software application, also known as an applet. The applet can be loaded into the ROM 14 during manufacture, but this means that no changes may be made to the applet after manufacture.

To enable changes to be made to the applet, it is more commonly loaded into the EEPROM 18 after the smart card 10 has been manufactured. When the smart card 10 is accessed through the interface 20 the applet is executed by the microprocessor 12 utilising RAM 16 as required.

Read and write access to the EEPROM 18 is only available to the applet through the operating system to ensure security. Data files, for holding information relating to a user of the card, are stored in the EEPROM 18.

Referring to Fig. 2, in accordance with the present invention, an initialisation process 30 of a smart card applet is shown. When the applet is first executed, the start initialisation step 32 is called.

A check data file step 34 then attempts to access each data file that is required by the applet. One way for the check data file step 34 to function is to use the 'select file' function available through the operating system of the smart card 10. If the data file is present then a standard response is received including information such as a file identification, file size, structure and length of records. If the applet receives information relating to the data file then the presence of the data file is verified. If a data file is not present an error code is returned. If the applet receives this error code then the applet recognises that the file does not exist. For each file that has been identified as not present, a create file step 36 creates the data file.

The data files created during the create file step 36 do not have any personalisation information related to a user of the card. If personalisation is required for the data file created, a personalisation step 38 requests personalisation data 40. An allow access step 40 then allows the applet to access any data files during execution.

If a data file is present the initialisation process 30 goes directly to the allow access step 40.

By utilising the initialisation process 30 the applet becomes completely interoperable, as data files do not have to be created manually. Reducing manual intervention of creating the specifications of files helps to minimise the likelihood of error. This also means that there is no need to create the files during personalisation and it is only required to supply the personalisation data. Furthermore, hen the application is passed on to another vendor, the specifications of the files need not be given, as the applet will create the files.

Improvements and modifications may be incorporated without departing from the scope of the present invention.

## Claims

1. A method of managing files in an electronic portable card, the method comprising the steps of:
(i) accessing a non-volatile memory means;
(ii) checking for the presence of at least one data file in the non-volatile memory means; and
(iii) creating the at least one data file in the non-volatile memory means if the at least one data file is not present.

2. A method as claimed in claim 1, wherein step (ii) comprises attempting to select the at least one data file and monitoring a response.

3. A method as claimed in claim 2, wherein, when the response provides information relating to the at least one data file, the presence of the at least one data file is verified.

4. A method as claimed in any preceding claim, further comprising the step of requesting personalisation data for the at least one data file.

5. A method as claimed in any preceding claim, wherein the non-volatile memory means is an Electronically Erasable Programmable Read-Only Memory (EEPROM).

6. A computer program product for a portable electronic card according to any preceding claim.

7. An electronic portable card on which files are managed according to any preceding claim.
